Europäisches Patentamt

European Patent Office

Office européen des brevets

(19)

(11)  **EP 1 249 683 B1**

(12)  **FASCICULE DE BREVET EUROPEEN**

(45) Date de publication et mention
de la délivrance du brevet:
**15.09.2004   Bulletin 2004/38**

(51) Int Cl.⁷: **G01B 7/34**, G01B 7/287,
G01L 5/04

(21) Numéro de dépôt: **02290887.5**

(22) Date de dépôt: **09.04.2002**

(54) **Procédé de détection de défauts de planéité**

Verfahren zur Detektion von Defekten in der Ebene

Method for detecting defects in evenness

(84) Etats contractants désignés:
**AT BE CH CY DE DK ES FI FR GB GR IE IT LI LU
MC NL PT SE TR**

(30) Priorité: **10.04.2001  FR 0104903**

(43) Date de publication de la demande:
**16.10.2002   Bulletin 2002/42**

(73) Titulaire: **VAI CLECIM**
**42400 Saint-Chamond (FR)**

(72) Inventeurs:
• **Faure, Jean-Paul**
**95610 Eragny, Oise (FR)**

• **Malard, Thierry**
**95290 L'Isle Adam (FR)**

(74) Mandataire: **Catherine, Alain et al**
**Cabinet Harlé & Phélip**
**7, rue de Madrid**
**75008 Paris (FR)**

(56) Documents cités:
**DE-A- 19 747 655        US-A- 3 324 695**
**US-A- 4 356 714**

## Description

L'invention a pour objet un procédé et un dispositif de détection de défauts latents de planéité d'un produit en bande métallique défilant suivant une direction longitudinale.

Lors du laminage de bandes de métal et notamment de tôles minces laminées, il peut se produire des défauts de planéité qui apparaissent lorsque la bande est au repos mais sont à l'état latent dans la bande, tant que celle-ci est maintenue sous traction. De tels défauts proviennent, en général, de légères variations, sur la largeur de la bande, de l'allongement réalisé par le laminage et peuvent être corrigés en agissant sur les conditions de laminage et, en particulier, sur la répartition, dans le sens transversal, de la pression de serrage appliquée entre les cylindres de travail.

A cet effet, les laminoirs modernes sont munis, habituellement, de moyens permettant de corriger le profil de l'entrefer de passage du produit.

Souvent, la cage du laminoir est équipée de vérins qui prennent appui sur les empoises des cylindres de travail de façon à les rapprocher ou les écarter, avec un effet de cambrage des cylindres.

Dans une autre disposition, des moyens d'arrosage fractionnés permettent d'agir thermiquement sur le profil des cylindres.

On peut aussi agir sur le profil d'au moins un cylindre de soutien qui comprend une enveloppe déformable montée rotative autour d'un arbre fixe et prenant appui sur celui-ci par une pluralité de vérins réglables en position et en pression, qui sont répartis sur la largeur de la bande.

Habituellement, ces moyens de réglage sont commandés à partir des informations données par un dispositif de mesure placé en aval du laminoir et sensible aux variations, sur la largeur de la bande, de l'effort de traction appliqué sur celle-ci qui correspondent elles-mêmes aux variations d'allongement des fibres longitudinales de la bande.

Un tel dispositif de mesure est constitué, généralement, d'un rouleau déflecteur comprenant un corps cylindrique monté rotatif autour d'un axe perpendiculaire à la direction longitudinale de défilement de la bande. Celle-ci est appliquée sous traction sur un secteur angulaire de la face externe du rouleau qui est équipé d'une série de capteurs permettant de mesurer les variations de la pression locale d'application de la bande. Ces détecteurs sont écartés les uns des autres et répartis sur toute la longueur du rouleau, la bande étant ainsi divisée en une série de zones longitudinales correspondant chacune à une zone de détection de largeur déterminée, sur laquelle on intègre la mesure effectuée par le capteur pour déterminer le défaut latent à corriger dans la zone longitudinale correspondante.

Pour éviter des interférences entre les mesures effectuées sur deux zones de mesure adjacentes, les capteurs sont avantageusement décalés angulairement d'une zone à la suivante.

D'une façon générale, un rouleau de mesure comprend donc une pluralité de zones de détection réparties sur toute sa longueur et munie chacune d'un capteur pour l'émission d'un signal dépendant de la pression d'application de la partie correspondante de la bande, lors du passage de cette zone de détection dans le secteur angulaire de contact de la bande avec le rouleau.

La bande étant sous traction, le rouleau doit résister à la flexion et comprend donc, habituellement, un corps central tubulaire d'épaisseur suffisante pour donner la résistance nécessaire et muni, sur sa face externe, d'une pluralité de logements dans lesquels sont placés les capteurs de mesure, chaque logement étant fermé, vers l'extérieur, par une paroi de protection pour éviter un contact direct entre le capteur et la bande en défilement.

Dans certaines dispositions connues, on mesure directement la pression appliquée par la bande dans la zone de détection au moyen d'un capteur de force, par exemple piézo-électrique ou à quartz, qui est interposé entre le fond du logement et la paroi de protection sur laquelle est appliquée la bande.

Pour obtenir une information directement représentative de la pression appliquée, la paroi de protection peut être constituée par la face externe d'une pièce en forme de chapeau qui ferme le logement vers l'extérieur mais il faut laisser entre ce chapeau et la face latérale du logement, un léger jeu qui peut se remplir de salissures (DE-A-19747655).

Dans certaines dispositions connues, le chapeau de protection est constitué d'une paroi emboîtée dans un lamage ménagé sur le pourtour du logement. Cependant, comme le capteur est serré entre le fond du logement et la paroi de protection qui prend appui sur le fond du lamage, la mesure de pression est perturbée par la résistance à la flexion de cette paroi.

Pour éviter ces inconvénients, on a proposé, dans le document US-A-3,324,695, de recouvrir le rouleau d'une enveloppe continue appliquée sur la face externe du corps résistant du rouleau à la manière d'une frette, chaque logement d'un capteur étant recouvert par une partie de cette enveloppe formant une paroi mince de protection.

Dans ce cas, de la façon décrite dans le document US-A-4,356,714, on ne mesure pas directement la pression appliquée par la bande, mais la déformation de la paroi mince résultant de cette pression, au moyen d'un capteur de position ayant deux éléments montés coulissants radialement l'un dans l'autre et prenant appui, en sens opposés respectivement, sur le fond du logement et sur la face interne de la paroi mince, au centre de celle-ci.

Cette paroi mince tendue au-dessus du capteur et sensible à la pression appliquée par le produit, se comporte comme une plaque encastrée sur ses bords et les formules classiques de résistance des matériaux permettent donc de déterminer la pression appliquée sur la paroi déformable à partir de la flèche mesurée au centre de la plaque.

Avantageusement, les capteurs de position peuvent être du type « LVDT » comportant un enroulement primaire et deux enroulements secondaires montés en opposition, entre lesquels un couplage magnétique variable est créé par un noyau mobile lié au déplacement de la tige du capteur.

Le rouleau est associé à un système de mesure automatique qui permet, à chaque tour, d'envoyer une impulsion de mesure sur l'enroulement primaire de chaque capteur et de lire le signal induit aux bornes des enroulements secondaires. Un codeur de position angulaire permet d'effectuer la mesure en charge lors du passage de chaque capteur dans la zone d'application de la bande. Une autre mesure est effectuée à vide lorsque le capteur se trouve à l'extérieur du secteur angulaire d'application. La différence entre la mesure en charge et la mesure à vide donne la flèche au centre de la plaque, à partir de laquelle on peut déterminer la pression appliquée et, par conséquent, l'effort de traction dans la zone longitudinale correspondante de la bande.

La mesure à vide peut se faire dans une position angulaire quelconque du rouleau ne correspondant pas à la mesure en charge pour l'un des capteurs. Ceux-ci sont donc répartis judicieusement à la surface du rouleau de façon à permettre une gestion aisée des mesures à vide et en charge, pendant une rotation du rouleau (US-A-4,356,714).

Jusqu'à présent, de tels rouleaux de mesure de planéité n'étaient utilisés que dans les installations de laminage à froid pour lesquelles la température de la bande reste modérée.

En effet, si l'on utilise un capteur de pression serré entre le fond du logement et le chapeau de fermeture de celui-ci, les dilatations des différentes pièces, en cas d'élévation de température, risquent de provoquer des coincements et, par conséquent, des perturbations de la mesure.

Cet inconvénient n'existe pas dans les systèmes où l'on utilise des capteurs de position recouverts d'une plaque de fermeture. Toutefois, cette plaque est constituée d'une paroi mince qui prend immédiatement la température de la bande et est donc soumise à une déformation thermique. De plus, la vitesse de rotation étant élevée, la force centrifuge peut également induire une légère déformation.

La comparaison de la valeur en charge du signal avec une valeur à vide mesurée à chaque tour, permet de remettre à zéro le capteur et de mesurer la flèche réelle de la plaque mais il faut, pour cela que le corps du rouleau reste à une température sensiblement constante et ceci n'est valable que si la température de la bande est modérée.

Cependant, même dans les installations de laminage à froid, la réduction d'épaisseur induit un certain échauffement de la bande dont la température peut approcher 200°C.

D'autre part, les défauts de planéité résultant des variations d'allongement sur la largeur de la bande apparaissent aussi lors du laminage à chaud et il serait donc intéressant de mesurer dès ce moment, les risques de défauts futurs de façon à pouvoir les corriger.

Cependant, même pour un métal non-ferreux tel que l'aluminium, la bande à chaud se trouve à une température élevée, de plusieurs centaines de degrés. Si l'on utilise, pour la mesure, des capteurs de pression, il faut alors envisager de refroidir chaque capteur, par exemple par circulation d'un fluide de refroidissement tel que de l'eau. Mais la réalisation d'un rouleau muni de circuits de refroidissement est très complexe.

Les capteurs de position n'ont pas cet inconvénient car ils peuvent être prévus pour fonctionner même à des températures élevées étant donné qu'ils sont constitués, simplement, de deux éléments coulissant l'un dans l'autre. Toutefois, en cas de température élevée, les déformations thermiques de la plaque de fermeture de chaque logement sont relativement importantes.

Il en résulte que, jusqu'à présent, il n'avait pas semblé possible d'utiliser des rouleaux de mesure de planéité de type classique dans le cas du laminage à chaud.

L'invention a pour objet de résoudre ces problèmes grâce à un nouveau procédé qui permet de réaliser des mesures précises de la répartition des contraintes sur une bande même si celle-ci se trouve à une température élevée.

L'invention est donc particulièrement adaptée aux installations de laminage à chaud pour lesquelles, jusqu'à présent, il semblait impossible d'utiliser un rouleau de planéité.

Cependant, en raison des avantages obtenus et de la simplicité des moyens employés, l'invention peut également s'appliquer aux installations de laminage à froid car elle permet d'améliorer la précision de la mesure et, par conséquent, de la correction de planéité.

D'autre part, les dispositions selon l'invention permettent de déterminer un profil de variation de la température de la bande sur la largeur de celle-ci de façon à en tenir compte pour la correction des défauts de planéité.

L'invention s'applique donc, d'une façon générale, à un procédé de détection des défauts latents de planéité dans un produit en bande défilant suivant une direction longitudinale et appliquée sous traction sur un secteur angulaire d'un rouleau de mesure comprenant un corps cylindrique monté rotatif autour d'un axe perpendiculaire à la direction de défilement et ayant une face externe le long de laquelle sont réparties une pluralité de zones de détection centrées dans des plans transversaux écartés les uns des autres et comprenant chacune un capteur d'émission, à chaque tour, d'un signal ayant une valeur mesurée en charge, correspondant à la pression appliquée sur la zone de détection par une zone longitudinale correspondante de la bande lors du passage de la zone de détection dans le secteur angulaire d'application de la bande, procédé dans lequel on compare, à chaque tour, la valeur mesurée en charge du signal émis par chaque capteur avec une valeur de référence, de façon à déterminer, dans chaque zone longitudinale de la bande, une information représentative de la traction appliquée dans cette zone.

Conformément à l'invention, on mesure deux valeurs à vide du signal émis par chaque capteur, respectivement avant et après le passage de la zone de détection correspondante dans le secteur angulaire d'application de la bande et la valeur de référence à laquelle est comparée, à chaque tour, la valeur en charge du signal émis par chaque capteur est obtenue par combinaison de deux valeurs à vide, respectivement antérieure et postérieure, du signal émis par le même capteur.

De préférence, les deux valeurs à vide du signal sont mesurées, respectivement, immédiatement avant et immédiatement après le passage de la zone de détection correspondante dans le secteur d'application de la bande.

En pratique, la valeur de référence peut être égale à la moyenne arithmétique des deux valeurs à vide, respectivement antérieure et postérieure à la mesure en charge. Toutefois, il est possible de combiner différemment les deux valeurs à vide en pondérant celles-ci de façon à tenir compte de l'évolution de la température au cours de la rotation du rouleau.

L'invention est particulièrement adaptée aux rouleaux de planéité dans lesquels on mesure la déformation de la paroi de protection au centre de chaque zone de détection au moyen d'un capteur de position ayant un élément prenant appui sur le fond du logement et un élément prenant appui sur la paroi de protection. Cependant, l'invention présente aussi des avantages pour les autres types de rouleaux car elle permet, d'une façon générale, d'améliorer la précision de la mesure.

L'invention permet de réaliser le contrôle de planéité d'une tôle laminée à chaud, ce qui ne semblait pas possible auparavant. Dans ce cas, il est particulièrement avantageux de réaliser un refroidissement forcé de la face externe du rouleau sur un secteur de celle-ci s'étendant entre les zones où sont mesurées les deux valeurs à vide du signal émis par chaque capteur, de façon à ramener la température du rouleau à un niveau sensiblement constant avant le retour de la zone de détection dans le secteur d'application.

Toutefois, l'invention peut aussi s'appliquer avantageusement au laminage à froid car elle permet d'améliorer la précision de la mesure de planéité.

Mais l'invention présente également d'autres avantages. En particulier, à partir du profil de variation des valeurs à vide postérieures mesurées après le passage de chaque capteur dans le secteur d'application, on détermine le profil de variation de la température sur la largeur de la bande pour en déduire l'influence de la dilatation thermique de chaque zone longitudinale sur la mesure de planéité effectuée dans cette zone, de façon que les corrections de planéité déterminées, pour chaque zone, à partir de ladite mesure de planéité, correspondent à une température moyenne valable sur toute la largeur de la bande.

De la sorte, on peut déterminer les corrections de planéité à effectuer sur les différentes zones longitudinales de la bande de façon à obtenir le profil de planéité souhaité sur une tôle à température homogène et même après refroidissement à température ambiante.

Mais l'invention sera mieux comprise par la description suivante d'un mode de réalisation particulier, donné à titre d'exemple, en référence aux dessins annexés.

La figure 1 est une vue en coupe transversale d'un rouleau de planéité.

la figure 2 est une vue de face, avec arraché partiel.

La figure 3 et la figure 4 sont des vues schématiques en coupe d'une zone de détection, respectivement avant et pendant le passage de celle-ci dans le secteur d'application.

La figure 5 est une vue en coupe d'une zone de détection juste après le passage dans le secteur d'application.

La figure 6 est un diagramme montrant la variation de l'amplitude du signal de mesure pendant une rotation du rouleau.

La figure 7 est un diagramme montrant la variation de l'amplitude du signal de mesure pendant une rotation du rouleau, dans le cas d'une bande à température élevée.

La figure 8 est un diagramme montrant le profil de variation de la mesure de planéité pour une tôle laminée à chaud.

La figure 9 montre le profil de variation de la température de la tôle sur la largeur de celle-ci.

La figure 10 montre le profil de variation de la mesure de planéité pour une tôle à température homogène.

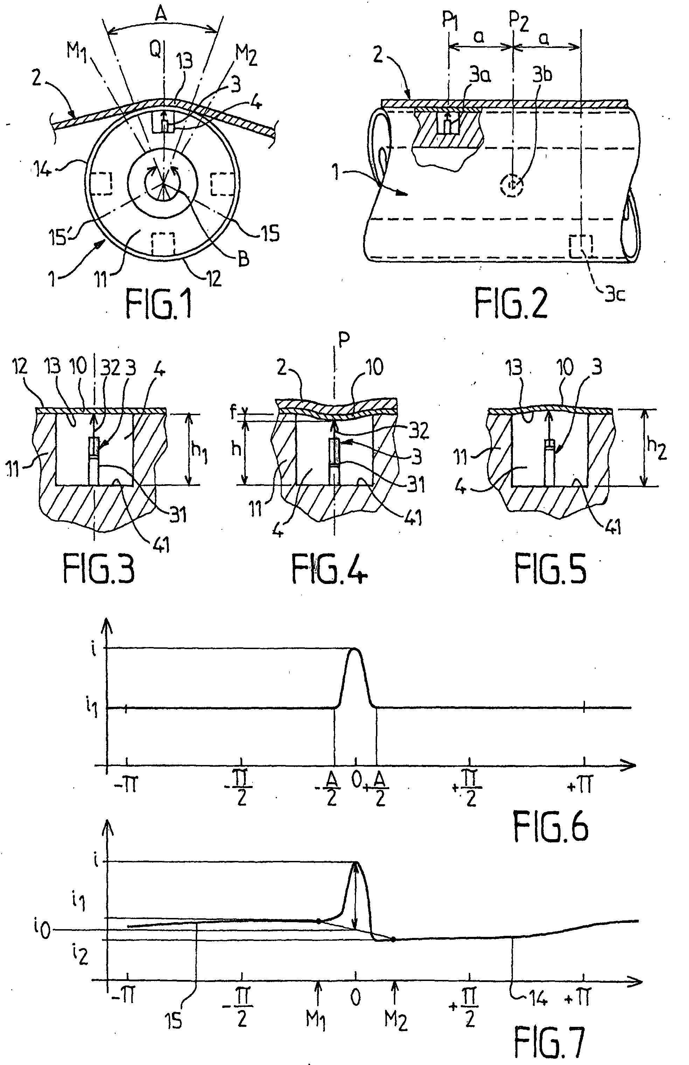

Sur les figures 1 et 2, on a représenté schématiquement un rouleau de mesure de planéité 1 sur lequel est appliquée sous traction une bande 2 recouvrant un secteur angulaire A du rouleau.

Le rouleau 1 est constitué, de façon connue, d'un corps tubulaire résistant 11 recouvert d'une enveloppe mince frettée 12.

Le rouleau 1 est équipé d'une pluralité de capteurs de mesure 3 placés chacun dans un logement 4, par exemple un alésage borgne percé dans le corps résistant 11, ce logement étant fermé, vers l'extérieur, par une partie 10 de l'enveloppe mince 12 formant une paroi de protection du capteur 3.

Comme le montre la figure 2, les capteurs 3 sont écartés axialement d'un pas (a) et répartis en hélice sur toute la longueur du rouleau, deux capteurs voisins 3a, 3b étant décalés angulairement de façon à faciliter le traitement des mesures.

Toutes ces dispositions sont bien connues et ne nécessitent pas une description détaillée.

Comme le montrent schématiquement les figures 3, 4, 5, chaque capteur 3 est interposé entre le fond 41 du logement correspondant 4 et la face interne 13 de la partie 10 de l'enveloppe 12 qui ferme le logement 4 vers l'extérieur.

Dans un mode de réalisation particulièrement avantageux, chaque capteur 3 est un capteur de position centré sur l'axe du logement 4 et comprenant un élément fixe 31 prenant appui sur le fond 41 du logement 4 et un élément mobile 32 formant un palpeur prenant appui au centre de la paroi de protection 10.

D'une façon générale, la face externe 12 du rouleau 1 comprend une partie 13 en contact avec la bande 2, qui couvre un secteur angulaire d'application A, centré sur un plan Q passant par l'axe du rouleau et une partie 14 écartée de la bande et couvrant un secteur libre $B = 2\pi - A$.

Avant le passage de la zone de détection 4 dans le secteur d'application A (figure 3), le centre de la face interne 13 de la plaque 10 se trouve à une distance $h_1$ du fond 41 du logement 4, qui correspond à la longueur déployée du capteur de position 3.

Lorsque le capteur 3 passe dans le secteur A d'application de la bande 2 (figure 4), la pression exercée par celle-ci détermine un léger enfoncement de la plaque 10 et, la distance du centre de celle-ci au fond 41 du logement est réduite à h.

Le palpeur 32 permet donc de mesurer la flèche ($f = h_1 - h$) au centre de la paroi 10. Étant donné que l'enveloppe 12 est frettée sur le corps résistant 11, chaque partie 10 fermant un logement 4 forme une plaque mince encastrée sur sa périphérie dont on peut calculer la déformation sous l'effet des contraintes appliquées, par application des règles de la résistance des matériaux. On peut donc en déduire la pression appliquée par la bande 2 sur la plaque 10 et, par conséquent, l'effort de traction dans une zone longitudinale correspondante de la bande 2 centrée sur le plan P passant par l'axe du capteur 3 et orthogonal à l'axe de rotation du rouleau 1.

Chaque capteur 3 émet un signal de mesure dont l'amplitude dépend de la position du palpeur 32 par rapport à l'élément fixe 31 et varie, donc, périodiquement à chaque tour du rouleau.

Cette variation d'amplitude est représentée schématiquement sur le diagramme de la figure 6 qui indique, en ordonnée, l'amplitude du signal de mesure émis par le capteur en fonction de la position angulaire de celui-ci indiquée en abscisse.

A chaque tour du rouleau, tant que le capteur 3 se trouve dans le secteur libre B, le signal émis présente une valeur à vide $i_1$ correspondant à la longueur $h_1$ couverte par le capteur 3. Lorsque celui-ci arrive dans le secteur d'application A, l'amplitude du signal de mesure augmente rapidement jusqu'à une valeur en charge i correspondant au passage, dans le plan de symétrie Q, du capteur 3 dont la longueur est alors réduite à h en raison de l'enfoncement de la plaque 10. L'amplitude du signal diminue ensuite pour revenir à la valeur à vide $i_1$ dès que le capteur est sorti du secteur d'application A.

Dans le cas habituel d'utilisation d'un rouleau de planéité pour le laminage à froid, tel que décrit dans le document US-A-3,324,695, on peut admettre que la paroi de protection 10 se comporte comme une plaque élastique qui revient à sa position tendue de la figure 3 dès que la zone de détection a quitté le secteur d'application de la bande.

Comme le montre la figure 6, la valeur à vide $i_1$ du signal, mesuré à chaque tour du rouleau et correspondant à la longueur $h_1$, est donc sensiblement constante et constitue une valeur de référence à laquelle peut être comparée la valeur en charge i du signal émis à chaque tour. On peut donc mesurer la valeur de la flèche (f) dans chaque plan transversal P1, P2 du rouleau pour en déduire la répartition des pressions et, par conséquent, des contraintes de traction sur la largeur de la bande.

Cependant, pour que la valeur à vide $i_1$ du signal de mesure reste sensiblement constante, il faut que la bande 2 reste à une température modérée.

Or, chaque partie 10 de l'enveloppe 12 fermant un logement 4 constitue une plaque mince qui prend immédiatement la température de la bande lors du passage du logement 4 dans le secteur d'application A. De ce fait, la plaque à tendance à se dilater.

Par conséquent, à la sortie du secteur d'application, la plaque 10 d'application qui n'est plus recouverte par la bande 2 se déforme et le centre de la plaque 10 revient à une distance $h_2$ du fond 41 du logement 4.

Si la bande 2 est à une température relativement élevée, cette dilatation n'est pas négligeable et la distance $h_2$ est supérieure à la distance initiale $h_1$ avant l'arrivée du capteur dans la zone d'application A (figure 5).

Le diagramme de la figure 7 illustre, dans ce cas, la variation d'amplitude du signal de mesure émis par le capteur. Comme précédemment, la valeur à vide antérieure du signal émis par le capteur avant son passage dans le secteur d'application A, est égale à $i_1$ et cette valeur augmente progressivement à l'arrivée de la zone de détection 10 dans le secteur A jusqu'à une valeur en charge i correspondant au passage du capteur dans le plan de symétrie Q. L'amplitude du signal diminue ensuite jusqu'à une valeur à vide postérieure $i_2$ qui correspond à la distance $h_2$ entre le centre de la plaque 10 et le fond 41 du logement. Comme le montre la figure 5 du fait de la dilatation de la plaque 10, le palpeur 32 revient dans une position reculée par rapport à la position initiale de la figure 3 et la valeur à vide postérieure $i_2$ du signal est donc inférieure à la valeur à vide antérieure $i_1$.

Cependant, l'inertie thermique de la plaque mince 10 est très faible par rapport à celle du corps résistant 11 du rouleau. De ce fait, la plaque 10 se refroidit assez rapidement à l'air au cours de sa rotation dans le secteur libre B et revient à la position tendue de la figure 3, le palpeur 32 retrouvant sa position initiale par rapport à l'élément fixe 31. Comme le montre la figure 7, l'amplitude du signal remonte donc progressivement jusqu'à la valeur à vide antérieure $i_1$, à la fin du secteur libre B.

Normalement, si la bande reste à une température modérée, par exemple de l'ordre de 200°C, le refroidissement à l'air, dans le secteur libre B est suffisant. Toutefois, il peut se produire un échauffement progressif, avec légère dilatation, du corps résistant 11 et la longueur $h_1$ du capteur peut donc légèrement varier, ainsi que la valeur à vide $i_1$ du signal émis.

D'autre part, dans le cas du laminage à chaud, la température de la bande est beaucoup plus élevée et le refroidissement naturel du rouleau n'est plus suffisant pour maintenir sa température.

Il est alors préférable de réaliser un refroidissement forcé de la face externe 12 du rouleau 1 sur une partie du secteur libre B, par exemple de la façon décrite dans la demande de brevet français N°2815705 de la même société. Par exemple, on peut réaliser un refroidissement du rouleau par immersion de la partie inférieure de celui-ci entre deux génératrices 15, 15' écartées symétriquement par rapport au plan médian Q (figure 1). Il en résulte, comme le montre la figure 7, que la courbe représentative du signal de mesure remonte progressivement jusqu'à la valeur antérieure $i_1$.

Cependant, même avec un refroidissement forcé, il n'est pas facile de maintenir la température de la face externe du rouleau à un niveau constant.

L'invention permet de remédier à cet inconvénient en élaborant une valeur de référence à partir de deux valeurs à vide mesurées respectivement, avant et après le passage du capteur dans le secteur d'application.

De préférence, comme le montre la figure 1, ces deux valeurs à vide seront mesurées aux deux extrémités du secteur libre 14, respectivement dans une position M1 placée immédiatement avant l'arrivée dans le secteur d'application A et dans une position M2 placée immédiatement après la sortie du secteur d'application. Par exemple, ces positions M1 et M2 pourront être écartées symétriquement d'un angle de 5 à 10° de part et d'autre des limites du secteur d'application A.

A partir de ces deux mesures à vide, on élabore une valeur de référence $i_0$ à laquelle va être comparée la valeur en charge i. De façon simple, cette valeur de référence $i_0$ peut être égale à la moyenne arithmétique $\frac{i_1 + i_2}{2}$ des deux valeurs à vide, respectivement antérieure et postérieure.

Ainsi, les variations éventuelles des deux valeurs vide $i_1$ et $i_2$ peuvent se compenser et il apparaît que, même dans le cas du laminage à chaud pour lequel il est particulièrement difficile de contrôler la température du rouleau, la valeur de référence ainsi élaborée reste sensiblement constante pour chaque capteur. Il est donc possible de réaliser efficacement un étalonnage des mesures effectuées avec remise à zéro du capteur à chaque tour.

D'autre part, même dans le cas du laminage à froid, l'invention permet de s'affranchir des fluctuations inévitables de la valeur mesurée à vide et, par conséquent, d'augmenter sensiblement la précision des mesures effectuées.

Mais l'invention apporte un autre avantage important pour l'obtention de la planéité souhaitée.

Jusqu'à présent, en effet, les corrections de planéité étaient effectuées à partir des informations données par le rouleau de mesure en considérant que toutes les fibres de la bande se trouvent à une température homogène.

Or, on a observé que, à la sortie du laminage la température de la bande peut varier dans le sens transversal, entre les bords et la partie centrale et ne s'homogénéise que par la suite.

Par exemple, on sait que, dans un laminoir, il est nécessaire de commander la rotation des cylindres. A cet effet, au moins l'un des cylindres, généralement un cylindre de soutien, est relié par une allonge à un moteur de commande placé sur un côté de la cage appelé côté d'entraînement, les organes auxiliaires, par exemple les moyens de changement de cylindres étant placés de l'autre côté appelé côté opérateur, et il apparaît que, généralement, la bande est plus chaude sur le côté entraînement.

Comme on le sait, la répartition inégale des contraintes de traction, sur la largeur de la bande correspond à de légères différences de longueur entre les différentes fibres longitudinales de la bande, qui produisent des défauts de planéité lorsque la traction est supprimée. La correction de planéité consiste donc, lors du laminage à agir sur la répartition des contraintes en fonction des mesures effectuées par le rouleau de planéité, de façon à compenser les défauts latents ainsi détectés.

Or, on s'est avisé qu'une partie des différences de longueur entre les différentes fibres, à l'origine de ces défauts latents, pouvait résulter, simplement, de dilatations inégales des fibres se trouvant à des températures légèrement différentes et que des corrections effectuées comme habituellement , en supposant une température homogène de la bande, ne correspondent pas exactement aux défauts résultant seulement d'une répartition inégale de l'effort de laminage sur la largeur de la bande.

A titre d'exemple, on sait que par convention, la mesure de planéité qui permet de déterminer les corrections à effectuer sur les différentes fibres de la bande s'exprime en « Unités I ». Or, on peut montrer que, pour une bande en acier dont le coefficient de dilatation est $1,2 \times 10^{-5}$, une différence de 1°C entre les températures de deux fibres longitudinales de la bande créée une erreur de 1,2 Unité I sur la mesure de planéité. Or, les mesures effectuées sur une bande laminée à froid dont la température moyenne est de l'ordre de 100°C, montrent qu'il peut exister une différence de température de l'ordre de 5 à 10°C entre les bords latéraux et la partie centrale. Il apparaît donc que l'erreur sur la mesure de planéité due à cette différence de température n'est pas négligeable.

De ce fait, les corrections de planéité effectuées à partir de ces mesures peuvent ne pas être appropriées et, après refroidissement, des défauts résiduels peuvent subsister, quand la bobine est de nouveau déroulée.

L'invention permet de remédier à de tels inconvénients en tenant compte de cette variation de température dans le sens transversal, pour la détermination des corrections de planéité à effectuer.

Comme on l'a indiqué, en effet, la partie 10 de l'enveloppe 12, qui s'étend au-dessus de chaque capteur, prend immédiatement la température de la bande et se dilate en conséquence. Par conséquent, la distance $h_2$ entre le fond 41 du logement et le centre de la plaque 10, qui est mesurée immédiatement après le passage de la zone de détection dans le secteur d'application A, est représentative de la température de la bande 2 dans la zone longitudinale correspondante.

Ainsi, la valeur à vide postérieure $i_2$ du signal émis par chaque capteur est fonction de la température de la bande dans la zone longitudinale correspondante.

Il est donc possible, à partir du profil de variation des valeurs à vide postérieures mesurées après le passage de chaque capteur dans le secteur d'application, de déterminer le profil de variation de la température sur la largeur de la bande pour en déduire l'influence de la dilatation thermique de chaque zone longitudinale de la bande sur la mesure de planéité qui détermine la correction à effectuer dans cette zone.

Ainsi, on peut tenir compte dans la mesure de planéité déterminée, pour chaque zone longitudinale, à partir de la valeur en charge du signal de mesure, de la part correspondant à la dilatation, de façon à déterminer les corrections qui seraient à effectuer sur une bande ayant une température homogène sur toute sa largeur.

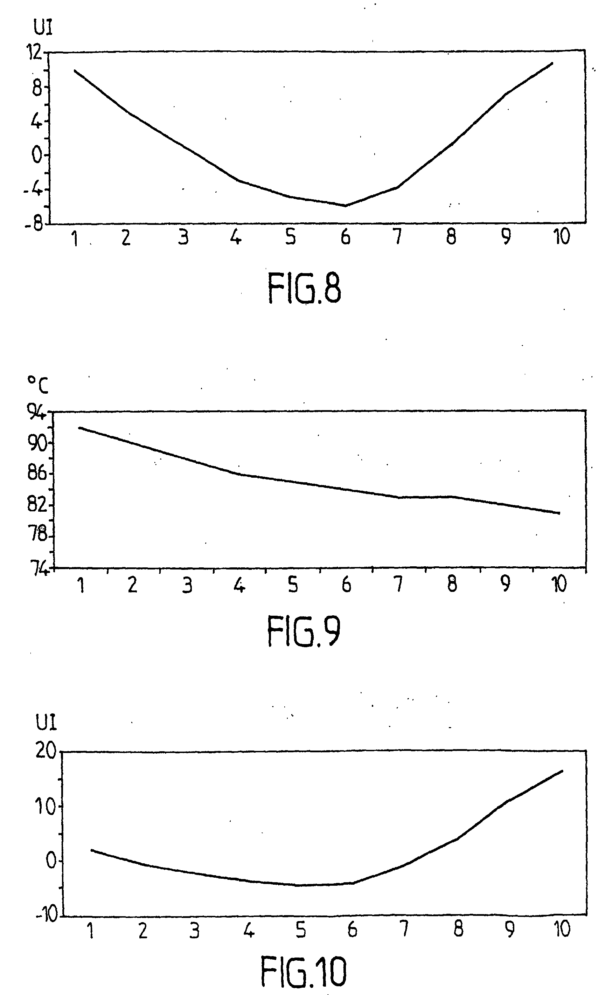

Les étapes de ce procédé sont illustrées par les diagrammes des figures 8, 9, 10 qui ont été établis pour une bande en acier, dans le cas d'un rouleau de planéité comprenant dix zones de détection réparties sur la largeur de la bande .

La figure 8 montre la variation, sur la largeur de la bande, de la mesure de planéité exprimée en Unité I et indiquée en ordonnée, cette mesure étant effectuée, pour chaque zone de détection, par comparaison entre la valeur en charge du signal de mesure et la moyenne des deux valeurs à vide, respectivement antérieure et postérieure.

La figure 9 montre la variation de la température déterminée, pour chaque zone, à partir des mesures à vide postérieures, et indiquée en ordonnée sur le diagramme.

La figure 10 a été obtenue par combinaison des deux courbes des figures 8 et 9 et indique la planéité équivalente de la bande, chaque mesure dans une zone étant corrigée de façon à compenser l'effet de la température dans cette zone, pour ne tenir compte que de l'effet d'une répartition inégale des contraintes sur une bande à température homogène.

Bien entendu, l'invention ne se limite pas aux seuls modes de réalisation qui viennent décrits à titre de simples exemples et pourraient faire l'objet de variantes sans s'écarter du cadre de protection défini par les revendications.

C'est ainsi que les figures 8 à 10 ont été établies pour une bande d'acier à une température de l'ordre de 100°C mais le procédé s'applique également à une bande à chaud ayant une température élevée. Les courbes seraient, simplement, un peu différentes.

D'autre part, il est plus simple de déterminer la valeur de référence à laquelle est comparé chaque signal en charge à la moyenne arithmétique des deux mesures à vides, respectivement antérieure et postérieure. Toutefois, il serait possible d'effectuer une autre combinaison des deux mesures à vide en pondérant celles-ci de façon à mieux tenir compte de l'évolution de la température au cours de la rotation du rouleau.

**Revendications**

1. Procédé de détection des défauts latents de planéité dans un produit en bande (2) défilant suivant une direction longitudinale et appliqué sous traction sur un secteur angulaire (A) d'un rouleau de mesure (1) comprenant un corps cylindrique (11) monté rotatif autour d'un axe perpendiculaire à la direction de défilement et ayant une face externe le long de laquelle sont réparties une pluralité de zones de détection (4) centrées dans des plans ($P_1$, $P_2$...) perpendiculaires à l'axe de rotation du corps cylindrique écartés les uns des autres et comprenant chacune un capteur (3) d'émission, à chaque tour, d'un signal de mesure ayant une valeur en charge, correspondant à la pression appliquée sur la zone de détection par une zone longitudinale correspondante de la bande (2) lors du passage de la zone de détection dans le secteur angulaire (A) d'application de la bande, procédé dans lequel on compare, à chaque tour, la valeur en charge (i) du signal de mesure émis par chaque capteur (3) avec une valeur de référence, de façon à déterminer, dans chaque zone longitudinale de la bande (2), une information représentative de la contrainte de traction appliquée dans cette zone,

   **caractérisé par le fait que** l'on mesure deux valeurs à vide ($i_1$, $i_2$) du signal émis par chaque capteur (3), respectivement avant et après le passage de la zone de détection correspondante (4) dans le secteur angulaire (A) d'application de la bande (2) et que la valeur de référence ($i_0$) à laquelle est com-

parée, à chaque tour, la valeur en charge (i) du signal émis par chaque capteur (3) est une combinaison des deux valeurs à vide, respectivement antérieure ($i_1$) et postérieure ($i_2$), du signal émis par le même capteur (3).

2. Procédé selon la revendication 1, **caractérisé par le fait que** les deux valeurs à vide ($i_1$, $i_2$) du signal émis par chaque capteur (3) sont mesurées, respectivement, immédiatement avant et immédiatement après le passage de la zone de détection correspondante dans le secteur (A) d'application de la bande (2).

3. Procédé selon l'une des revendications 1 et 2, **caractérisé par le fait que** la valeur de référence ($i_0$) est égale à la moyenne arithmétique des deux valeurs à vide, respectivement antérieure ($i_1$) et postérieure ($i_2$) à la mesure en charge.

4. Procédé selon l'une des revendications précédentes, **caractérisé par le fait que** chaque zone de détection comprend un capteur (3) placé dans un logement (4) ménagé dans le corps (11) du rouleau et recouvert par une plaque (10) de fermeture du logement placée dans le prolongement de la face externe du rouleau (11) et que l'on mesure les variations de position du centre de la zone de détection au moyen d'un capteur de position (3) ayant un premier élément (31) prenant appui sur le fond du logement et un second élément (31) prenant appui sur la plaque de fermeture (10), au centre de celle-ci.

5. Procédé selon l'une des revendications précédentes, **caractérisé par le fait que** l'on réalise un refroidissement forcé de la face externe (12) du rouleau (1) sur un secteur de celle-ci s'étendant entre les zones où sont mesurées les deux valeurs à vide ($i_1$, $i_2$ ) du signal émis par chaque capteur (3), de façon à ramener la température du rouleau (1) à un niveau sensiblement constant avant le retour de la zone de détection (4) dans le secteur d'application.

6. Procédé selon la revendication 4 **caractérisé par le fait que**, à partir du profil de variation des valeurs à vide postérieures ($i_2$) mesurées après le passage de chaque capteur (3) dans le secteur d'application (A), on détermine le profil de variation de la température sur la largeur de la bande pour en déduire l'influence de la dilatation thermique de chaque zone longitudinale sur la planéité effectuée dans cette zone, de façon que les corrections de planéité déterminées, pour chaque zone, à partir des informations données par le rouleau de mesure, correspondent à une température homogène de la bande sur toute sa largeur.

7. Procédé selon la revendication 6 **caractérisé par le fait que** les corrections de planéité sont déterminées pour chaque zone en tenant compte de la variation de température permettent de régler la planéité souhaitée de la bande refroidie.

**Patentansprüche**

1. Verfahren zum Detektieren latenter Ebenheitsdefekte in einem Bandprodukt (2), das in eine Längsrichtung läuft und unter Zug an einem Winkelsektor (A) einer Messwalze (1) angelegt wird, die einen zylindrischen Körper (11) umfasst, der drehbar um eine zu der Laufrichtung senkrechte Achse montiert ist und eine Außenfläche hat, entlang welcher eine Vielzahl von Detektionszonen (4) verteilt sind, die in Ebenen ($P_1$, $P_2$...) zentriert sind, die zu der Drehachse des zylindrischen Körpers senkrecht stehen, die voneinander beabstandet sind und jede einen Fühler (3) zum Senden, bei jeder Umdrehung, eines Messsignals umfassen, das einen Lastwert hat, der dem auf die Detektionszone von einer entsprechenden Längszone des Bands (2) beim Passieren der Detektionszone in dem Winkelsektor (A) zum Anlegen des Bands ausgeübten Druck entspricht; Verfahren, bei dem man bei jeder Umdrehung den Lastwert (i) des Messsignals, das von jedem Fühler (3) gesendet wird, mit einem Referenzwert vergleicht, um in jeder Längszone des Bands (2) eine Information zu bestimmen, die für die Zugspannung, ist, die in dieser Zone angelegt wird, repräsentativ ist,
**dadurch gekennzeichnet, dass** man zwei Leerwerte ($i_1$, $i_2$) des von jedem Fühler (3) gesendeten Signals jeweils vor und nach dem Passieren der entsprechenden Detektionszone (4) in dem Winkelsektor (A) beim Anlegen des Bands (2) misst und dass der Referenzwert ($i_0$), bei dem der Lastwert (i) des von jedem Fühler (3) gesendeten Signals, mit dem der Referenzwert bei jeder Umdrehung verglichen wird, und zwar eine Kombination der beiden Leerwerte ist, und zwar jeweils des vorausgehenden ($i_1$) und des nachfolgenden ($i_2$) des von demselben Fühler (3) gesendeten Signals.

2. Verfahren nach Anspruch 1, **dadurch gekennzeichnet, dass** die Leerwerte ($i_1$, $i_2$) des von jedem Fühler (3) gesendeten Signals jeweils unmittelbar vor und unmittelbar nach dem Passieren der entsprechenden Detektionszone in dem Sektor (A) des Anlegens des Bands (2) gemessen werden.

3. Verfahren nach einem der Ansprüche 1 und 2, **dadurch gekennzeichnet, dass** der Referenzwert ($i_0$) gleich dem arithmetischen Mittel der beiden Leerwerte, jeweils dem vorausgehenden ($i_1$) und dem nachfolgendem ($i_2$) der Messung unter Bela-

stung, ist.

4. Verfahren nach einem der vorhergehenden Ansprüche, **dadurch gekennzeichnet, dass** jede Detektionszone einen Fühler (3) umfasst, der in einer Aufnahme (4) platziert ist, die in dem Körper (11) der Walze eingerichtet und durch eine Platte (10) zum Verschließen der Aufnahme abgedeckt ist, die in der Verlängerung der Außenfläche der Walze (11) platziert ist, und dass man die Stellungsvariationen der Mitte der Detektionszone mittels eines Positionsfühlers (3) misst, der ein erstes Element (31) aufweist, das auf dem Boden der Aufnahme aufliegt, und ein zweites Element (31), das auf der Verschlussplatte (10) in deren Mitte aufliegt.

5. Verfahren nach einem der vorhergehenden Ansprüche, **dadurch gekennzeichnet, dass** man eine Fremdkühlung der Außenfläche (12) der Walze (1) auf einem Sektor dieser Walze durchführt, der sich zwischen den Zonen erstreckt, in welchen die Leerwerte ($i_1$, $i_2$) des von jedem Fühler (3) gesendeten Signals gemessen werden, sodass die Temperatur der Walze (1) auf ein Niveau zurückgebracht wird, das vor der Rückkehr von der Detektionszone (4) in den Anlegesektor im Wesentlichen konstant ist.

6. Verfahren nach Anspruch 4, **dadurch gekennzeichnet, dass** man, ausgehend von dem Variationsprofil der nachfolgenden Leerwerte ($i_2$), die nach dem Passieren jedes Fühlers (3) des Anlegesektors (A) gemessen werden, das Variationsprofil der Temperatur über der Bandbreite bestimmt, um daraus den Einfluss der Wärmedehnung jeder Längszone auf die in dieser Zone bewirkte Ebenheit derart abzuleiten, dass die für jede Zone, ausgehend von den von der Messwalze gegebenen Informationen, bestimmten Ebenheitskorrekturen einer homogenen Temperatur des Bands auf seiner ganzen Breite entsprechen.

7. Verfahren nach Anspruch 6, **dadurch gekennzeichnet, dass** die Ebenheitskorrekturen für jede Zone unter Berücksichtigung der Temperaturvariation, die das Einstellen der gewünschten Ebenheit des abgekühlten Bands erlaubt, bestimmt werden.

**Claims**

1. Method for detecting latent flatness defects in a band product (2) running along a longitudinal direction and applied under tensile load to an angular sector (A) of a measuring roll (1) comprising a cylindrical body (11) mounted to rotate around an axis perpendicular to the running direction and having an external surface along which are distributed a plurality of detection zones (4) centred in planes ($P_1$, $P_2$...) perpendicular to the rotation axis of the cylindrical body spaced from one another and each comprising a transmission sensor (3), at each rotation, of a measurement signal having a value, corresponding to the pressure applied to the detection zone by a corresponding longitudinal zone of the band (2) when the detection zone passes through the angular application sector (A) of the band, method wherein, at each rotation, the value under load (i) of the measurement signal transmitted by each sensor (3) is compared with a reference value, in order to assess, in each longitudinal zone of the band (2), information representative of the tensile load applied in this zone,

 **characterised in that** two values in empty condition ($i_1$, $i_2$) of the signal transmitted by each sensor (3) are measured, respectively before and after the corresponding detection zone (4) passes through the angular application sector (A) of the band (2) and that the reference value ($i_0$) to which is compared, at each rotation, the value under load (i) of the signal transmitted by each sensor (3) is a combination of both values in empty condition, respectively preceding ($i_1$) and subsequent ($i_2$), of the signal transmitted by the same sensor (3).

2. Method according to claim 1, **characterised in that** both values in empty condition ($i_1$, $i_2$) of the signal transmitted by each sensor (3) are measured, respectively, immediately before and immediately after the corresponding detection zone passes through the application sector (A) of the band (2).

3. Method according to one of claims 1 and 2, **characterised in that** the reference value ($i_0$) is equal to the arithmetic average of both values in empty condition, respectively preceding ($i_1$) and subsequent ($i_2$) the measurement under load.

4. Method according to one of the previous claims, **characterised in that** each detection zone comprises a sensor (3) placed in a recess (4) provided in the body (11) of the roll and covered by a closing plate (10) of the recess placed in the alignment of the external surface of the roll (11) and the variations in position of the centre of the detection zone are measured by means of a position sensor (3) having a first element (31) resting on the bottom of the recess and a second element (31) resting on the closing plate (10), in the centre of said plate.

5. Method according to one of the previous claims, **characterised in that** forced cooling of the external surface (12) of the roll (1) is applied to a sector of said surface extending between the zones where both values in empty condition ($i_1$, $i_2$) of the signal transmitted by each sensor (3) are measured, in order to bring the temperature of the roll (1) back to a substantially constant level before the detection zone (4) comes back to the application sector.

6. Method according to claim 4 **characterised in that**, on the basis of the variation profile of the subsequent values in empty condition ($i_2$) measured after each sensor (3) passes through the application sector (A), the variation profile of the temperature is determined over the width of the band in order to derive therefrom the influence of thermal expansion of each longitudinal zone on the flatness conducted in this zone, so that the flatness corrections determined, for each zone, on the basis of information given by the measuring roll, correspond to a homogeneous temperature of the band over its whole width.

7. Method according to claim 6 **characterised in that** the flatness corrections are determined for each zone while taking account of the temperature variation and enable to adjust the requested flatness of the band after cooling.

FIG.1

FIG.2

FIG.3

FIG.4

FIG.5

FIG.6

FIG.7

FIG.8

FIG.9

FIG.10